# EUROPEAN PATENT APPLICATION

(11) **EP 1 459 975 A1**
(43) Date of publication of application: **22.09.2004**
(21) Application number: 03425181.9
(22) Date of filing: 21.03.2003
(51) Int. Cl.: B62M 25/08

(54) **System and method for controlling the operating functions of a cycle**

(71) Applicant: CAMPAGNOLO S.R.L., I-36100 Vicenza (IT)
(72) Inventor: Guderzo, Gianfranco, 36071 Arzignano (Vicenza) (IT)
(74) Representative: Riccardi, Elisa

(57) **Abstract**

In an electronic control system for cycles, for example competition bicycles, which comprises a display unit, a control unit and a power unit for governing actuators provided on the cycle, for instance a gear shift actuator, in absence of said display unit, the control unit and the power unit are able to ensure performance of a set of basic locomotion functions, such as an upwards and downwards gear shifting and an upwards and downwards derailleur shifting.

## Description

### Field of the invention

The present invention relates to control systems for cycles and has been developed with particular attention to competition bicycles; however, the reference to this possible application, and in particular to the application in racing bicycles, is not to be meant in any way as limiting the possible fields of application of the invention.

### Description of the prior art

In the cycle field, over the last few years there has developed the tendency to provide electronic control systems to which different functions are delegated. Such electronic control systems are thus designed for receiving and processing the information gathered by sensors of different sorts, for obtaining information on the operation/running conditions of the cycle.

These electronic control systems are also designed for enabling the user to control actuators of different sorts for modifying, according to given criteria, and by acting both in an automatic way and via specific commands issued by the user, the aforesaid operation/running conditions of the cycle. In particular, the technique is known of controlling the gear shift and the derailleur shift of a cycle by means of electrical actuators.

For the need to process and supply to the user information on the conditions of operation/running of the cycle, said control systems are provided with display units.

These display units contain a processor with
storage capacity, the so-called cycle computer, in which there is stored information that may also include sensitive information regarding the user.

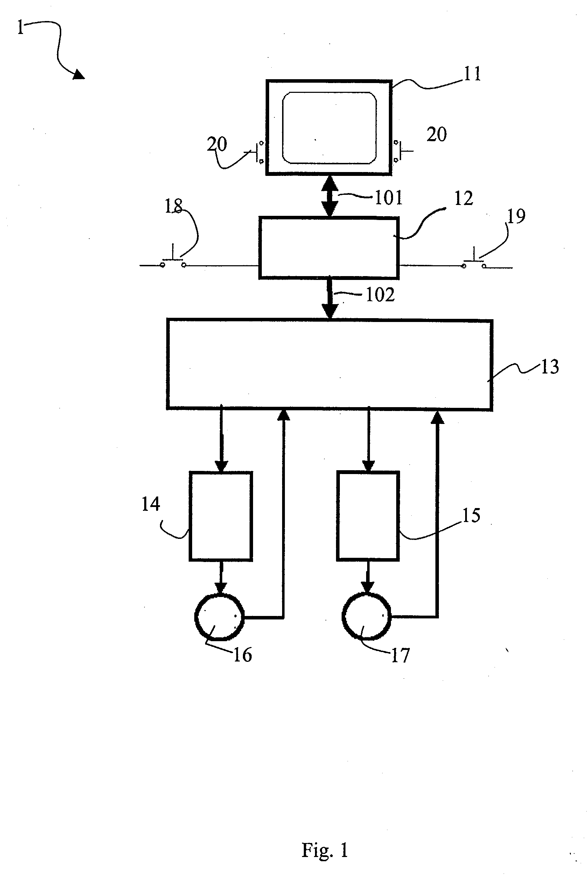

Figure 1 illustrates the structure of a known electronic control system 1 destined for equipping a cycle (not illustrated). The system 1 is made up of a set of functional blocks interconnected at the communication-channel level.

The system 1 comprises a display unit 11, designed to function as interface for display and management of the system, to provide information at a visual level to the user, and to enable setting of different modes of use of the electronic control system 1. The display unit 11 also incorporates cycle-computer functions, which can be controlled through push-buttons 20, and interacts through a connection 101 with the remaining part of the electronic control system 1 for performing functions of initialization and pre-setting.

By means of the connection 101, the display unit 11 is in signal and power electrical connection with a control unit 12, which is destined to function as interface and as a module for management of the requests made by the user, enabling conversion of the requests issued by the user both for positioning the gear shift and the derailleur. Such requests are generated by operating a push-button 18 corresponding to the derailleur and a push-button 19 corresponding to the gear shift, and take the form of signals or communication frames to be sent to a power unit 13, which is able to carry out said requests.

The power unit 13 is therefore designed to execute a function of control of specific operations, for instance the control of members for servo-assisted operation, such as the gear shift and the derailleur of the cycle.

For this purpose, the communication frames are sent to the power unit 13 by means of a connection 102, which sets it in signal and power connection with the control unit 12. The power unit 13 provides for management of the positioning requests for the gear shift and for the derailleur, controlling operation of a gear shift actuator 14 and a derailleur actuator 15, which are associated to respective position transducers 16 and 17. The position transducers 16 and 17 provide information on the position of the gear shift and of the derailleur to the power unit 13 so as to enable an optimal control of the actuators 14 and 15 and execution of procedures according to particular modalities that can be implemented by the cycle, such as, for instance, the zero-setting of the position of the actuators and the compensation of position drifts or offsets.

The display unit 11 is realized in a removable way with respect to the control unit 12 and to the power unit 13, as well as with respect to the cycle frame.

An electronic control system of this type is known, for instance, from the Italian patent application TO2000A000293 in the name of the present applicant, the contents of which is completely incorporated into the present description by reference.

The electronic control systems of this type known to the prior art are not in general able to operate in absence of the display unit. In particular, rather, the system described in the above indicated patent application is foreseen for detecting the removal of the display unit 11. In the event of its removal, the electronic control system is considered to be no longer usable, and the microcontroller of the control unit provides an intervention of inhibition of functionality of the electronic control system.

The possibility of removing the display unit, however, involves an increased danger of thefts, or else of loss of the display unit following upon impact or falls. The control system of the cycle can thus remain non-functioning, preventing the user not only from knowing the operation/running conditions of the cycle but also from modifying the aforesaid operation/running conditions of the cycle. In particular, the user could find himself prevented from using the gear shift of the cycle.

Such circumstance could moreover arise also in the case of malfunctioning of the display unit.

### Object and summary of the invention

The object of the present invention is to prevent the drawbacks outlined above and to propose a solution that will prevent total inoperability of the electronic control system of a cycle in absence of its display unit.

According to the present invention, such an object is achieved by means of a system for controlling the operating functions of a cycle which has the features recalled specifically in the claims that follow. The invention also regards a corresponding method and the corresponding processing units, as well as the corresponding computer program product, directly loadable into the memory of a digital computer and comprising software code portions for performing the method of the invention when the product is run on a computer.

Substantially, the solution according to the invention foresees that, even in the condition of removal of the display unit, the fixed part of the system will be able to ensure execution of at least some of the basic functions corresponding to the locomotion of the cycle, such as typically the functions corresponding to the gear shift and to the derailleur. In this way, the control system continues to react to the activation of the commands, and preferably this occurs according to modalities of operation that do not differ appreciably from the modalities of operation ensured by the system when the display unit is regularly associated to the system.

### Brief description of the annexed drawings

The invention will now be described, purely by way of non-limiting example, with reference to the annexed drawings, in which:
- Figure 1, which regards a system for controlling the operating functions of a cycle according to the prior art, has already been described previously;
- Figure 2 represents a schematic circuit diagram of a system for controlling the operating functions of a cycle according to the invention;
- Figures 3, 4 and 5 represent flowcharts corresponding to a control method implemented by the system for controlling the operating functions of a cycle according to the invention.

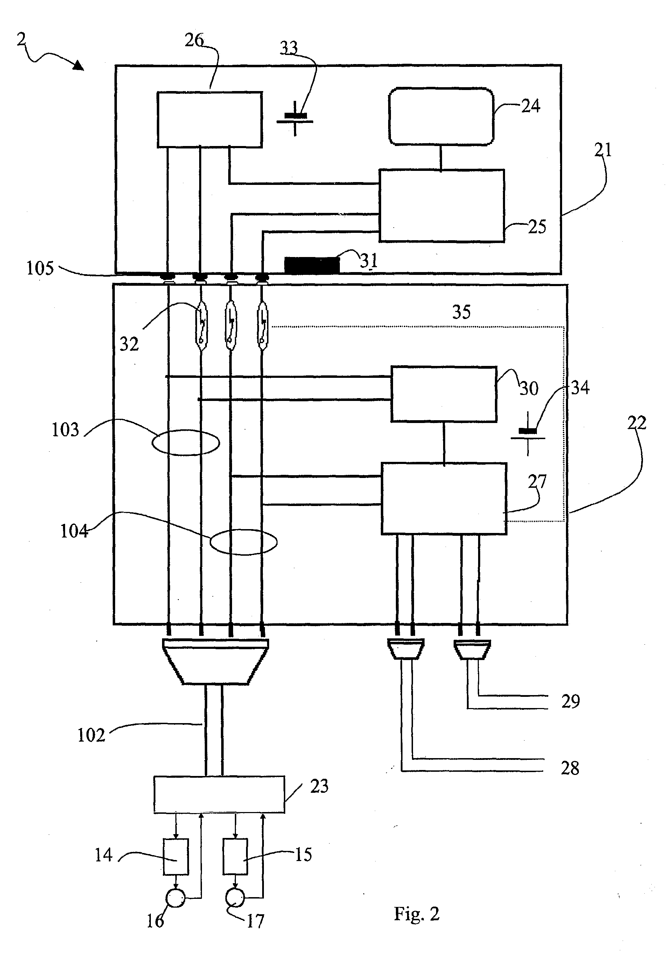

Figure 2 illustrates the partial block diagram of a system for controlling the operating functions of a cycle 2 according to the invention.

Such system refers, in general terms, to the basic diagram of the system 12 already described previously.

The system 2 thus comprises a display unit 21, a control unit 22 and a power unit 23.

The power unit 23 supplies the control unit 22 by means of a connection 102, which comes under a supply bus 103 and a communication bus 104. A connection 105 of the disconnectable type extends the supply bus 103 and the communication bus 104 to the display unit 21.

The disconnectable connection 105 can be obtained by a suitable four-conductor male-female connector, or else by sliding contacts.

Connected in parallel on the communication bus 103 in the control unit 22, a microcontroller 27 is arranged, which is provided with inputs 28 and 29 for receiving respective commands corresponding to the gear shift and to the derailleur. The microprocessor 27 thus provides for forwarding said commands, on the communication bus 104, to the power unit 23. The control unit 22 comprises an auxiliary supply circuit 30, which monitors, in a known way, operation of an auxiliary battery 34 for the microcontroller 27.

The display unit 21 comprises a display 24, driven by a microprocessor 25. Said microprocessor 25 is suitable for performing the cycle-computer functions and for communicating by means of the communication bus 104 with the control unit 22. An auxiliary supply circuit 26 monitors, in a known way, operation of an auxiliary battery 33 for the microcontroller 25.

The display unit 22 further comprises a magnet 31, whilst three magnetic switches 32, of the reed type, i.e. which are activated for closing by the presence of the magnet 31, are placed on the communication bus 104 and on one of the conductors of the supply bus 103.

The magnet 31 operates, as has been said, so as to keep said magnetic switches 32 closed.

Should the display unit 21 be removed from the cycle, the magnet 31 moves away from the magnetic switches 32, and the switches 32 open.

Interruption of the connection 105 thus interrupts communication of the signals and the supply between the control unit 22 and the display unit 21. Opening of the circuit via the switches 32 then has the effect of electrically insulating the control unit 22 with respect to the contacts (distal segments) of the connection 105, segments which may be seen in Figure 2 in the area comprised between the blocks representing the units 21 and 22, which may remain exposed as a result of the removal of the display unit 21.

Said solution, and the advantages that derive therefrom, are described in a detailed way in a European patent application filed on the same date in the name of the present applicant.

The microcontroller 27 can then be connected by a signal line 35 to the switches 32 so as to enable detection of the condition of operation, i.e., open or closed condition.

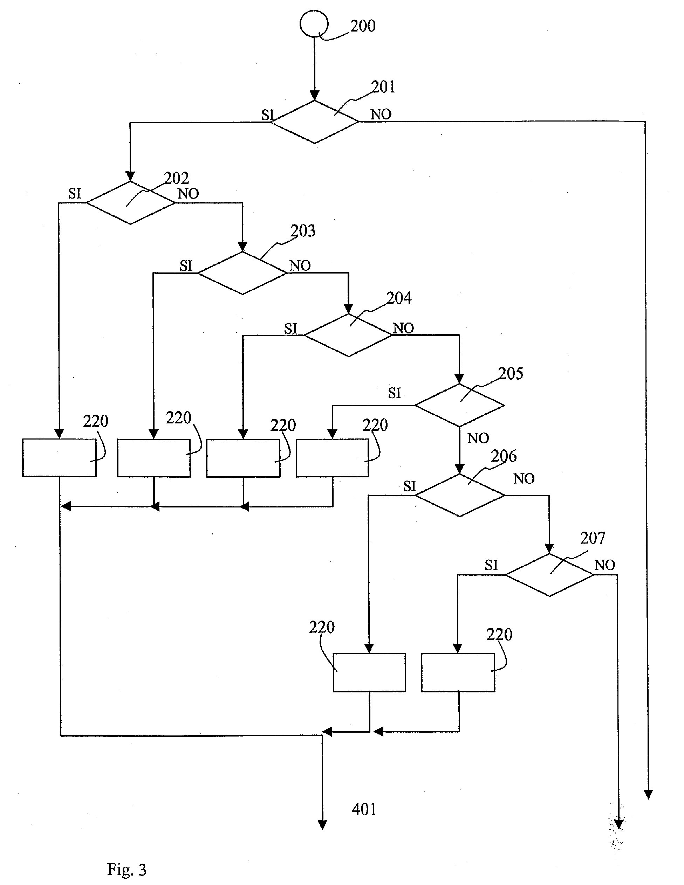

Figures 3, 4 and 5 illustrate, by way of example, the flowcharts corresponding to the method for controlling the operating functions of a cycle control implemented in the electronic control system 2.

Figure 3 illustrates the part of procedure corresponding to the display unit 21.

Here, starting from an initial step 200, the choice step 201 identifies the operation of requesting whether the user wishes to enter programming mode.

In the negative, the control goes to end-of-procedure.

In the affirmative, the control goes to a set of choice steps from 202 to 207, which are implemented in conditioned sequence and which, if the answer "YES" is given (whatever the step considered between 202 and 207), lead to performing a step 220 for sending the request to the power unit 23.

Specifically, step 202 corresponds to the request as to whether the user wishes to proceed to a step for resetting the actuator.

In the negative, at step 202, the control passes to a choice step 203, where the user is asked whether he wishes to exit the zero-setting step.

In the negative, at step 203, the control passes to step 204, which asks the user whether he wishes to proceed to a compensation step.

In the negative, at step 204, the control passes to step 205, where the user is asked whether he wishes to exit from the compensation step.

In the negative, at step 205, the control passes to step 206, where the user is asked whether the manual mode of operation is to be set.

In the negative, at step 206, the control passes to step 207, where the user is asked whether the automatic mode of operation is to be set.

In the negative, at step 207, the control passes to end-of-procedure.

Clearly, the choice steps above mentioned are performed by operating the push-buttons 20 of the display unit 21.

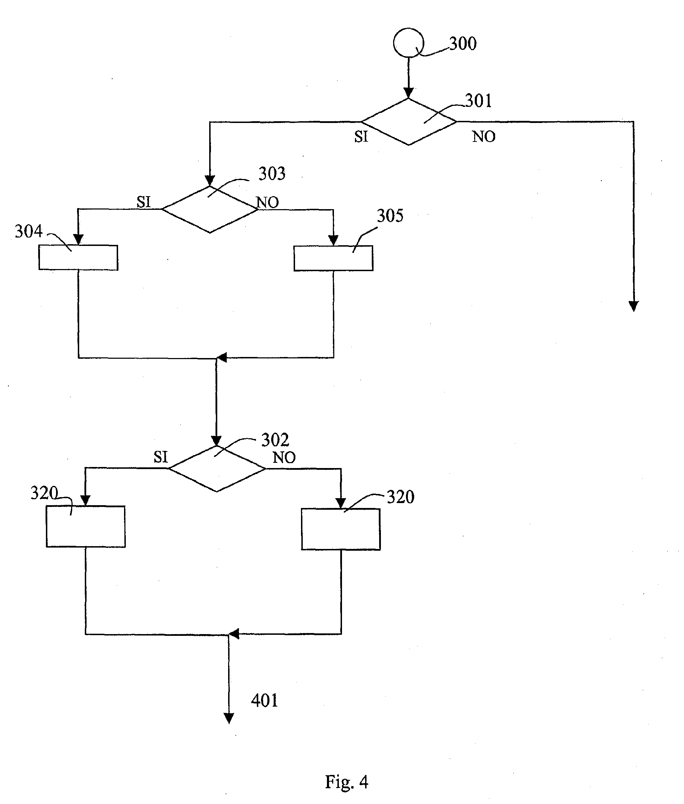

Figure 4 illustrates the part of procedure corresponding to the control unit 22.

Here, initially, in a choice step 301 there is executed the operation asking whether a command is present at input, i.e., at the inputs 28 and 29, as a result of operation of the controls 18 and 19.

In the negative, the control goes to end-of-procedure.

In the affirmative, the control passes to a choice step 303, which evaluates whether the display unit 21 is present, i.e., connected to the control unit 22.

In the affirmative, there is executed an operation, designated by block 304, for setting a signalling register or flag. Such flag, when set, indicates the presence of the display unit 22.

If the display unit 22 is not present, there follows an operation, designated by block 305, for resetting said flag, so that it indicates that the display unit 22 is not present.

In either case, the control then passes to a choice step 302, which evaluates whether the command is directed to the gear shift or the derailleur.

In either case, there is executed a step, designated by block 320, for sending the corresponding request to the power unit 23. Such request comprises information on the presence or not of the display unit 22 obtained via steps 304 and 305.

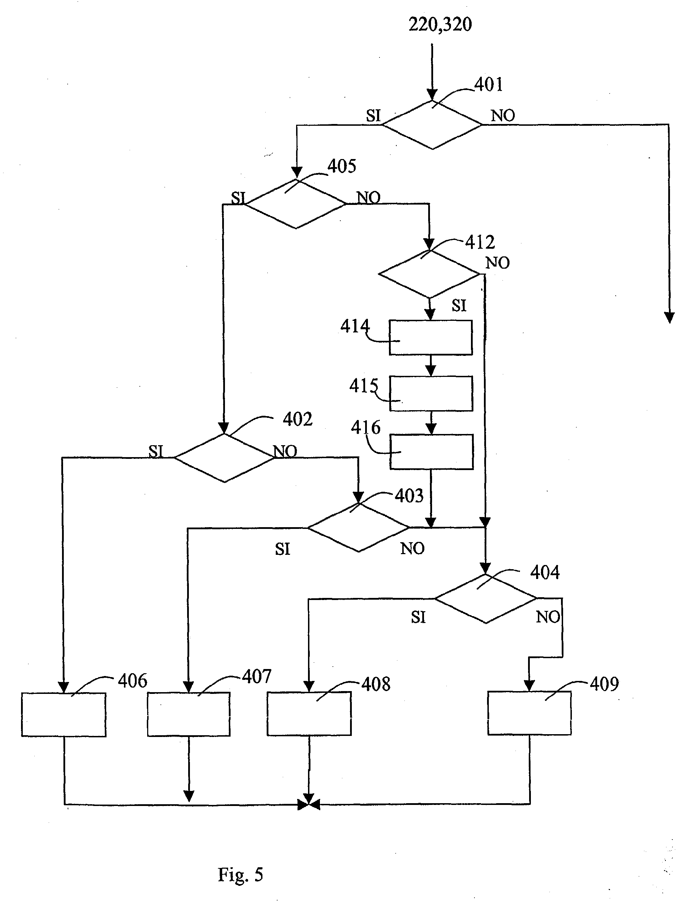

Figure 5 illustrates the part of procedure corresponding to the power unit 23.

Here, initially, a choice step 401 is executed, which involves the operation of evaluating whether a command is present at input, forwarded by the steps of blocks 220 and 320.

In the negative, the control goes to end-of-procedure.

In the affirmative, the control passes to a choice step 405, which evaluates whether the display unit 21 is present, i.e., connected to the control unit 22, in particular on the basis of the request coming from blocks 320.

If the display unit 21 is present, the control passes to a choice step 402, which evaluates whether the command detected at input requests execution of a step for zero-setting of an actuator.

In the affirmative, the control passes to a block designated by 406, in which the operation of displacement of the actuator is executed as long as the command is present at input to block 401.

In the negative, the control passes to a block 403, which evaluates whether the command requests execution of a step for compensation of the position of an actuator.

In the affirmative, the control passes to a block designated by 407, in which the operation of compensation of the actuator is executed as long as the command is present at input to block 401.

In the negative, the control passes to a choice step 404, which evaluates whether the command is of manual or automatic type.

In the case of a manual command, there is executed an operation of positioning according to the request set manually, such operation being indicated in a block 408.

In the case of an automatic command, there is executed an operation of positioning according to a pre-set sequence, such operation being indicated by a block 409.

In the case where, instead, the choice step 405 yields a negative result, i.e., the display unit is not present, the control passes to a choice step 412, which evaluates whether the command detected at input requests execution of a step corresponding to the choice of a operation mode or setting of a parameter.

In the affirmative, the control passes to a block, designated by 414, in which the values corresponding to the last parameter values already stored are re-loaded, said values being regarded in any case as reliable as compared to the uncertain state of the values that would appear upon removal of the display unit 21 during a procedure of choice of parameters.

Therefore, in a block 415, there is performed the operation of resetting the operating mode. Finally, in a block 416, there is set the request for normal procedure, which is sent to the corresponding choice step 404.

In the negative, the control passes to the choice step 404.

Consequently, from what has been illustrated so far, the operation proceeds as follows.

When the display unit 21 is removed, as has been said, the connection line 105 is interrupted and the control unit 22 can no longer receive commands from the display unit 21; namely, it can no longer transfer the requests in blocks 220 from the display unit 21 to the power unit 23.

The procedures corresponding to the control unit 22 and to the power unit 23 are, however, organized so as to maintain operative a set of basic locomotion functions, in particular the control of the gear shift and of the derailleur, so as to enable the controls even with the display unit 21 removed, so that, for instance, the commands that appear at the choice step 301, imparted by the push-buttons 18 and 19, are received from the control unit 22 and forwarded to the corresponding choice step 401 relating the power unit 23.

The control system 2 therefore continues to operate only according to a basic or normal operating mode.

For instance, as has been said, there will still remain the possibility of sending the commands by the push-buttons 18 and 19 for performing gear shift and derailleur shift.

More specifically, in presence of a removal of the display unit 21, it is foreseen to maintain active:
- normal operation in manual mode: corresponding to operation of the commands there is the positioning of the gear shift or of the derailleur in step 408; and
- normal operation in automatic mode: corresponding to operation of the push-buttons on the gear shift side there is the positioning of the gear shift and/or of the derailleur, according to a pre-determined sequence.

The choice steps regarding operation mode and setting of a parameter are concluded according to what is indicated with reference to Figure 5, i.e., retrieving the old values stored and entering a normal-operation mode, which enables the upwards and downwards gear shifting and the upwards and downwards derailleur shifting.

The solution just described achieves considerable advantages in comparison with the known solutions.

The electronic control system proposed may advantageously be employed also in anomalous situations, such as those of malfunctioning, theft or loss of the display unit.

Of course, without prejudice to the principle of the invention, the details of realization and embodiments may vary widely with respect to what is described and illustrated herein, without thereby departing from the scope of the present invention, as defined by the annexed claims.

For instance, the embodiment of the invention described previously (purely by way of example) foresees that the basic functions of locomotion of the cycle will in any case always be performed by the fixed part of the control system.

There are, however, conceivable, and hence included in the scope of the present invention, solutions in which the display unit, equipped with a microcontroller of adequate power and resources (for instance, for developing, in addition to the normal functions typical of a cycle computer, GPS positioning functions or advanced mobile communication functions, such as UMTS) may, with only modest additional computational load, assume the role of controlling the functions of locomotion, such as operation of the gear shift and of the derailleur. This must likewise foresee the possibility that, in the case of removal of the display unit, the implementation of said functions will be transferred to the "fixed" part of the system, which is, for said purpose, equipped with corresponding "back-up" modules, which are activated when the display unit is removed from the cycle. In particular, such transfer of function may occur according to the typical modalities of a save operation of the type usually performed in an electronic processing system, hence without appreciable discontinuities of operation being perceivable to the user.

As regards the possible implementation modes, the invention can be implemented in the form of a control system (initial installation or retrofit), which is able to control the operating functions of a cycle and which comprises at least one first unit and one second unit that are able to co-operate functionally with one another, with the first unit being configured for being selectively removable from the cycle. The second unit is then configured for implementing the set of basic locomotion functions of the cycle, guaranteeing performance thereof (even) in conditions of removal of the first unit.

In addition or alternatively, the invention can also be realized by configuring, with an appropriate software, a programmable control system, which comprises at least one first unit and one second unit, which are able to co-operate functionally with one another, with the first unit selectively removable from the cycle, causing the second unit to be able to implement the basic locomotion functions of the cycle, ensuring performance thereof in conditions of removal of the first unit from the cycle.

The invention regards therefore also the aforesaid software, intended as computer-program product.

Furthermore, the invention extends evidently also to the aforesaid system units, considered individually, and thus comprises:
- both a processing unit for a system for controlling the operating functions of a cycle, said processing unit being suitable for co-operating functionally with a further unit configured for being selectively removable from the cycle, where the processing unit is configured for implementing a set of basic locomotion functions, ensuring performance thereof in conditions of removal of said further unit from the cycle; and
- a control unit for cycles for controlling the operating functions of a cycle, said control unit being configured for being selectively removable from the cycle and for co-operating with at least one complementary unit associated to the cycle, where associated to said control unit are means for detecting the removal of the unit from the cycle and signalling said removal to the complementary unit, enabling said complementary unit to implement a set of basic locomotion functions, ensuring performance thereof in conditions of removal of the control unit from the cycle.

## Claims

1. A system for controlling the operating functions of a cycle, which comprises at least one first unit (11; 21) and one second unit (12,13; 22, 23), which are able to co-operate functionally with one another, said first unit (11; 21) being configured for being selectively removable from the cycle, the system being **characterized in that**:
said second unit (12,13; 22, 23) is configured for implementing a set of basic locomotion functions, ensuring performance thereof in conditions of removal of said first unit (21) from the cycle.

2. The system according to Claim 1, **characterized in that** said set of basic locomotion functions comprises the function of controlling, through corresponding controls (18, 19) associated to the second unit (22), an actuator (15) corresponding to a gear shift of the cycle and an actuator (14) corresponding to a derailleur of the cycle.

3. The system according to Claim 2, **characterized in that** said function of controlling the actuator (15) corresponding to a gear shift of the cycle and the actuator (14) corresponding to a derailleur of the cycle is enabled in manual mode.

4. The system according to Claim 2, **characterized in that** said function of controlling the actuator (15) corresponding to a gear shift of the cycle and the actuator (14) corresponding to a derailleur of the cycle is enabled in automatic mode.

5. The system according to any one of the previous claims, **characterized in that** said second unit (22, 23) comprises a microcontroller (27), which is designed for performing said set of basic locomotion functions.

6. The system according to any one of the previous claims, **characterized in that** said first unit (21), which is selectively removable from the cycle, is connected to said second unit (22) by means of at least one electrical connection (105), which can be decoupled by leaving exposed on said second unit (22) at least one distal contact part, and **in that** associated to said at least one electrical connection (105) is at least one switch (32), which can be selectively actuated for electrical insulation of said exposed distal contact part from said second unit (22).

7. The system according to Claim 6, **characterized in that** said first unit (21) comprises a magnet (31) and **in that** said at least one switch (32) is a switch that can be actuated magnetically (32) by said magnet (31).

8. The system according to any one of the previous claims, **characterized in that** said first unit is a display unit (21).

9. The system according to any one of the previous claims, **characterized in that** said second unit comprises a control unit (22), associated to which are the controls (18, 19) of the actuators (14, 15) and a power unit (23), which is suitable for driving said actuators (18, 19).

10. A processing unit (22; 23) for controlling the operating functions of a cycle, designed for co-operating functionally with a further unit (21), said further unit (21) being configured for being selectively removable from the cycle,
**characterized in that**:
said processing unit (22, 23) is configured for implementing a set of basic locomotion functions, guaranteeing performance thereof in conditions of removal of said further unit (21) from the cycle.

11. A control unit (21) for controlling the operating functions of a cycle, configured for being selectively removable from the cycle and for co-operating with at least one complementary unit (22) associated to the cycle,
**characterized in that** it comprises means for indicating its removal from the cycle to said complementary unit (22, 23), enabling said complementary unit (22, 23) to implement a set of basic locomotion functions.

12. A method for controlling the operating functions of a cycle, which comprises the steps of:
- providing a control system, which comprises at least one first unit (21) and one second unit (22, 23), which are able to co-operate functionally with one another;
- configuring said first unit (21) as a unit that is selectively removable from the cycle;
**characterized in that** it comprises the further steps of:
0 configuring said second unit (22) for implementing a set of basic functions, ensuring performance thereof, in conditions of removal of said first unit from the cycle.

13. The method according to Claim 12, **characterized in that** said set of basic locomotion functions comprises the function of controlling an actuator (15) corresponding to a gear shift of the cycle and an actuator (14) corresponding to a derailleur of the cycle.

14. The method according to Claim 13, **characterized in that** it enables said function of controlling the actuator (15) corresponding to a gear shift of the cycle and the actuator (14) corresponding to a derailleur of the cycle in manual mode (408).

15. The method according to Claim 13, **characterized in that** it enables said function of controlling the actuator (15) corresponding to a gear shift of the cycle and the actuator (14) corresponding to a derailleur of the cycle in automatic mode (409).

16. The method according to any one of the previous claims, **characterized in that** it implements said set of basic functions (27) in a microcontroller (27) comprised in said second unit (22, 23).

17. The method according to Claim 12, **characterized in that** it foresees storing the requests of the first unit (21) in said second unit (22) and using the last instance of said requests of the first unit for ensuring performance of said basic locomotion functions.

18. A cycle equipped with a system according to any one of Claims 1 to 9.

19. A computer program product directly loadable into the memory of a digital computer and comprising software code portions for performing the method according to any one of Claims 12 to 17 when the product is run on a computer.
